# EUROPEAN PATENT APPLICATION

(11) **EP 2 801 913 A1**
(43) Date of publication of application: **12.11.2014**
(21) Application number: 14166942.4
(22) Date of filing: 05.05.2014
(51) Int. Cl.: G06F 13/16

(54) **Memory control apparatus and method**

(30) Priority: 06.05.2013 KR 20130050820
(71) Applicant: Samsung Electronics Co., Ltd, Gyeonggi-do 443-742 (KR)
(72) Inventor: Kim, Ho-Young, Seoul (KR)
(74) Representative: Grünecker, Kinkeldey, Stockmair & Schwanhäusser

(57) **Abstract**

A memory control apparatus that minimizes memory bank collisions by rescheduling memory requests. The memory control apparatus includes a scheduler configured to, in response to at least two memory requests existing in a current cycle, schedule a plurality of elements included in the at least two memory requests based on information about memory banks determined for the plurality of elements; and a request generator configured to, in response to the scheduling of the plurality of elements by the scheduler, generate a scheduled memory request for the current cycle using at least one element in the at least two memory requests in order to prevent a memory bank collision.

## Description

### 1. Field

One or more exemplary embodiments relate to a memory control apparatus and method whereby memory bank collisions are reduced by scheduling memory requests.

### 2. Description of the Related Art

In a processor capable of processing a vector operation, a load/store instruction is generally processed in the pipeline, as follows: an address generation (AG) stage, a memory setup (MS) stage, a memory access (MA) stage, and a write back (WB) stage to write back data in a register file. Specifically, an address of a load/store request is calculated, and a memory bank to be accessed is selected in the AG operation. A memory is set for memory access in the MS operation, and a value is written back to, or retrieved from, a memory in the MA operation.

Generally, a memory bank can process only one memory request at each time with respect to one load/store instruction. Thus, a memory bank collision occurs if two or more memory requests for access to the same memory bank are issued at the same time. In this case, one memory request enters into the MA operation, and the other memory request stands by in the AG operation. In addition, in order to prevent a change in memory value while processing continuous memory requests, an operation of the processor is stalled. In particular, if two or more load/store instructions for access to multiple memory banks are issued at the same time, collisions occur between only some of the multiple memory banks. However, in this case, the processor may be stalled at every memory collision, thereby degrading data processing performance.

### SUMMARY

In one or more exemplary embodiments, there is provided a memory control apparatus, including a scheduler configured to, in response to a plurality of memory requests existing in a current cycle, schedule a plurality of elements included in the plurality of memory requests based on information about memory banks determined for the plurality of elements; and a request generator configured to, after scheduling the plurality of elements, generate a scheduled memory request for the current cycle using at least one element in the plurality of memory requests in order to prevent a memory bank collision.

The memory control apparatus may further include a bank determiner configured to, in response to receiving the plurality of memory requests, determine respective memory banks to be accessed by the plurality of elements included in the plurality of memory requests.

The bank determiner may calculate respective addresses of the plurality of elements, and determine respective memory banks for the plurality of elements based on the calculated addresses.

The memory control apparatus may further include one or more buffers corresponding to one or more memory banks, wherein, in response to the memory banks being determined for the plurality of elements, the scheduler may input an element of the plurality of elements to a buffer corresponding to the respective memory bank determined for the element of the plurality of elements.

When inputting the element to the corresponding buffer, the scheduler may tag the element with an identification (ID) of a memory request from the plurality of memory requests that includes the element.

The request generator may generate the scheduled memory request by extracting an element from each of the one or more buffers that contain an element.

The memory control apparatus may further include a controller configured to, in response to an element existing in any one of the buffers after generation of the scheduled memory request, cause a stall to occur when transmitting the scheduled memory request to a memory.

The controller may transmit the scheduled memory request to the memory in a next cycle.

In one or more exemplary embodiments, there is provided a memory controlling method, including: in response to a plurality of memory requests existing in a current cycle, scheduling a plurality of elements included in the plurality of memory requests based on information about memory banks determined for the plurality of elements; and, after scheduling the plurality of elements, generating a scheduled memory request using at least one element included in the plurality of memory requests without causing a memory bank collision.

The memory controlling method may further include, in response to receiving the plurality of memory requests, determining respective memory banks to be accessed by the plurality of elements included in the plurality of memory requests.

The determining of the memory banks may include calculating respective addresses of the plurality of elements, and determining the respective memory banks for the plurality of element based on the calculated addresses.

The scheduling of all elements may include, in response to the respective memory banks being determined for the plurality of elements, inputting an element of the plurality of elements into a buffer corresponding to the respective memory bank for the element of the plurality of elements.

The inputting of the element to the corresponding buffer may include tagging the element with an identification (ID) of a memory request from the plurality of memory requests that includes the element.

In the generating of the scheduled memory request, the scheduled memory request may be generated by extracting an element from each buffer of the buffers that contains an element.

The memory controlling method may further include, in response to an element existing in any one of the buffers after the scheduled memory request is generated, causing a stall to occur when transmitting the scheduled memory request to a memory.

The memory controlling method may further include transmitting the scheduled memory request to a memory in a next cycle.

In one or more exemplary embodiments, there is provided a memory control apparatus, including: a request generator configured to generate a scheduled memory request comprising at least one element from a plurality of elements included in a plurality of memory requests. The plurality of memory requests may respectively comprise at least one element. Each element of the plurality of elements included in a plurality of memory requests may have a corresponding determined memory bank. The determined memory bank of each of the at least one element of the scheduled memory request differs from the determined memory bank of each of the other elements of the scheduled memory request.

The request generator may generate the scheduled memory by extracting the at least one element from at least one respective buffer. The at least one respective buffer may correspond to the determined memory bank of the at least one element.

Each of the at least one respective buffers may uniquely correspond to one memory bank.

In one or more exemplary embodiments, there is provided a memory controlling method, including: generating a scheduled memory request comprising at least one element from elements included in a plurality of memory requests. The plurality of memory requests may respectively comprise at least one element. Each element of the plurality of elements included in a plurality of memory requests may have a corresponding determined memory bank. The determined memory bank of each of the at least one element of the scheduled memory request differs from the determined memory bank of each of the other elements of the scheduled memory request.

The generating may comprise extracting the at least one element from at least one respective buffer. The at least one respective buffer may correspond to the determined memory bank of the at least one element.

Each of the at least one respective buffers may uniquely correspond to one memory bank.

Other features and aspects may be apparent from the following detailed description, the drawings, and the claims.

### BRIEF DESCRIPTION OF THE DRAWINGS

The accompanying drawings, which are included to provide a further understanding of one or more exemplary embodiments and are incorporated in and constitute a part of this specification, illustrate exemplary embodiments, and together with the description serve to explain the principles of one or more exemplary embodiments.
FIG. 1 is a diagram illustrating a configuration of a memory system according to an exemplary embodiment.
FIG. 2 is a block diagram illustrating a memory control apparatus according to the exemplary embodiment in FIG. 1.
FIG. 3A shows a general procedure of processing memory requests when a memory bank collision does not occur.
FIG. 3B shows a general procedure of processing memory requests when a memory bank collision occurs.
FIG. 4A illustrates a procedure on how a memory control apparatus processes a memory request according to an exemplary embodiment.
FIG. 4B illustrates a procedure on how a memory control apparatus processes a memory request according to still another exemplary embodiment.
FIG. 4C illustrates a procedure on how a memory control apparatus processes a memory request according to yet another exemplary embodiment.
FIG. 5 is a flow chart illustrating a memory controlling method according to an exemplary embodiment.
FIG. 6 is a flow chart illustrating a memory controlling method according to another exemplary embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

Hereinafter, examples of a memory control apparatus and method are described in detail with reference to drawings.

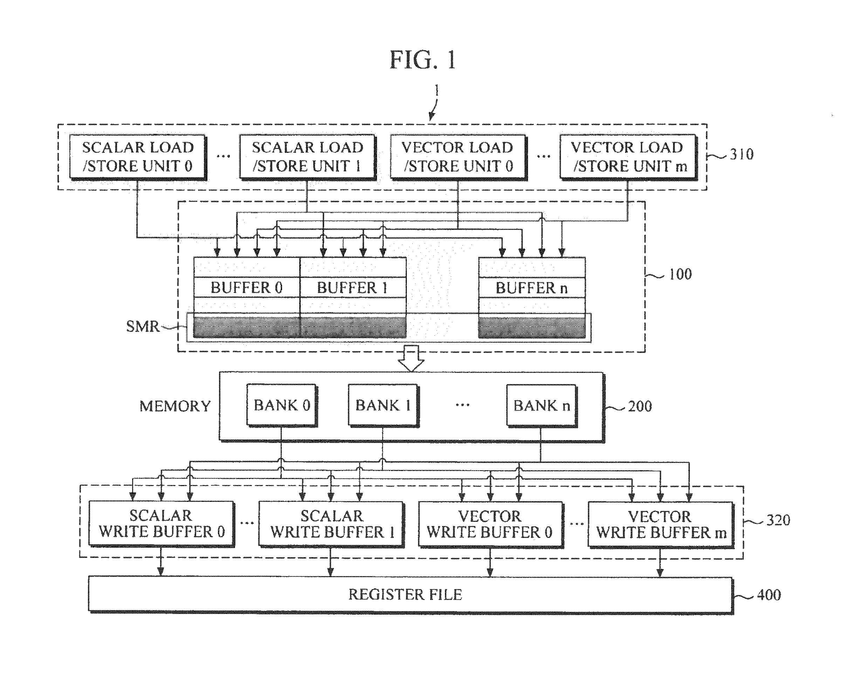

FIG. 1 is a diagram illustrating a configuration of a memory system according to an exemplary embodiment. Referring to FIG. 1, a memory system 1 may effectively support a high performance vector necessary to executing an application which processes massive data, such as images, audio and three-dimensional (3D) graphics.

In response to one or more load/store instructions in a specific cycle, a processor issues, through one or more load/store units 310, a memory request to access a memory. In response to a memory request from the one or more load/store units 310, a memory control apparatus 100 may determine a bank of a memory 200 (hereinafter referred to as a memory bank) to access an element included in the memory request. The memory request may be a scalar memory request that includes a single element to access one memory bank, or a vector memory request that includes two or more elements so that it is able to access two or more memory banks at the same time.

The memory control apparatus 100 transmits the memory request, for which memory banks are determined, to the memory 200 in order to access the memory 200. In the event that two or more memory requests exist in a specific cycle at the same time, the memory control apparatus 100 may schedule two or more memory requests using all elements included in each memory request, and generate a scheduled memory request SMR in order to access the memory 200. Herein, the event where two or more memory requests exist in a specific cycle at the same time may include cases where two or more memory requests are simultaneously received from a processor in the current cycle; where there are two or more outstanding memory requests which were not processed in a previous cycle; and where there is an outstanding memory request not processed in a previous cycle and one or more memory requests are received from a processor in the current cycle.

The memory control apparatus 100 may include one or more buffers, and each buffer may correspond to a different memory bank. In this case, the buffer may be a First-In-First-Out (FIFO) queue. Using the buffers, the memory apparatus 100 may schedule one or more elements included in each memory request.

Meanwhile, a processing result of a memory request, issued in a specific cycle in response to a load instruction, is stored in one or more buffers 320 and stands by until all the memory requests issued in the specific cycle in response to every load instruction are completely processed. If all the memory requests issued in the specific cycle are completely processed, data being in a stand-by state within the buffers 320 are written back to a register file 400 of the processor.

As such, by rescheduling every element to minimize memory bank collisions, it is possible to prevent a processor from stalling as much as possible, thereby improving processing performance.

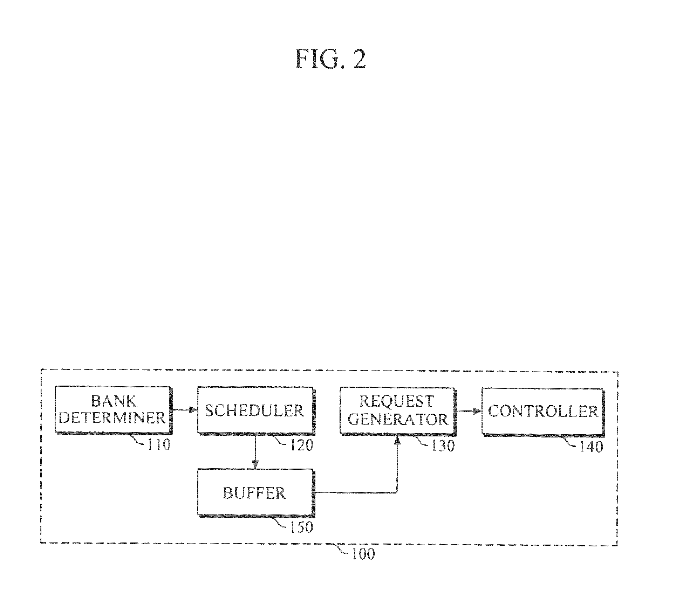

FIG. 2 is a block diagram illustrating a memory control apparatus according to the embodiment in FIG. 1. Referring to FIG. 2, a memory control apparatus 100 includes a bank determiner 110, a scheduler 120, a request generator 130, a controller 140 and a buffer 150.

If a memory request to access a memory to load or store data is received, the bank determiner 110 determines memory banks to be accessed by one or more elements included in the memory request. At this point, the bank determiner 110 may calculate an address of each element included in the memory request, and determine a memory bank to be accessed by each element based on the calculated address.

The scheduler 120 schedules all the elements included in the memory request based on the information about memory banks determined in the bank determiner 110. That is, in the event that there are two or more memory requests to be processed in the current cycle, the scheduler 120 may schedule all the elements included in the two or more memory requests based on the information about determined memory banks. Herein, the event that there are two or more memory requests to be processed in the current cycle may include cases where two or more memory requests are simultaneously received from a processor at the current cycle; where there are two or more outstanding memory requests that were not processed at a previous cycle; and where there is an outstanding memory request not processed at a previous cycle, and one or more memory requests are received from a processor at the current cycle.

After scheduling of all the elements in the memory request are completed, the request generator 130 may generate a scheduled memory request for the current cycle using one or more elements so as to prevent a memory bank collision

Specifically, the scheduler 120 may schedule each element included in a memory request using one or more buffers 150 in the bank determiner 110. At this point, each of the one or more buffers 150 may correspond to a different memory bank, as described above. If the bank determiner 110 determines respective memory banks for all the elements included in an input memory request, the scheduler 120 may schedule the elements by inputting each element to a corresponding memory bank.

When inputting an element to a corresponding buffer 150, the scheduler 120 may tag the element with identification (ID) of the memory request including the element so that the original memory request may be distinguishable from a scheduled memory request that will be generated by the request generator 130 at a later time.

The request generator 130 may generate a scheduled memory request by extracting an element from each one or more of the buffers, and combining the extracted element with each other. Since each buffer 150 corresponds to a different memory bank, even if one element is extracted from each buffer 150, a memory bank collision does not occur.

To put it simply, in response to two or more memory requests to be processed in the current cycle, memory access is not performed in a unit of memory request input from a processor. Instead, all the elements included in every memory request are rescheduled to thereby generate a scheduled memory request consisting of elements that are able to be processed in the current cycle. In this manner, memory bank collisions may be reduced, and thus, a processor may be prevented from stalling as much as possible.

After the scheduled memory request for the current cycle is generated, the controller 140 transmits the scheduled memory request to a memory for processing. Specifically, the controller 140 may transmit the scheduled memory request to the memory in the next cycle. At this time, whether any outstanding element remains in any buffer 150 is checked. If an outstanding element remains in a buffer 150, it means that a memory bank collision has occurred, possibly causing a stall to occur.

If a new memory request is input from a processor in the next cycle, memory banks for all the elements included in the new memory request are determined, and then the elements are input to the buffers 150, as described above. In addition, if any outstanding elements have been inputted into any buffer 150 at the current cycle or a previous cycle and still remains in the buffer 150, such outstanding elements are scheduled and a memory request scheduled for the next cycle is generated. Further, if a new memory request is not input from a processor in the next cycle, and outstanding elements input at the previous cycle (i.e., the current cycle or a cycle before the next cycle) remain in the buffers 150, the outstanding elements are scheduled to thereby generate a scheduled memory request for the next cycle.

The above-described procedure is performed repeatedly at each cycle. If no outstanding element remains in the buffers 150 at a specific cycle, it means that every memory request has been completely processed, and thus, the procedure ends.

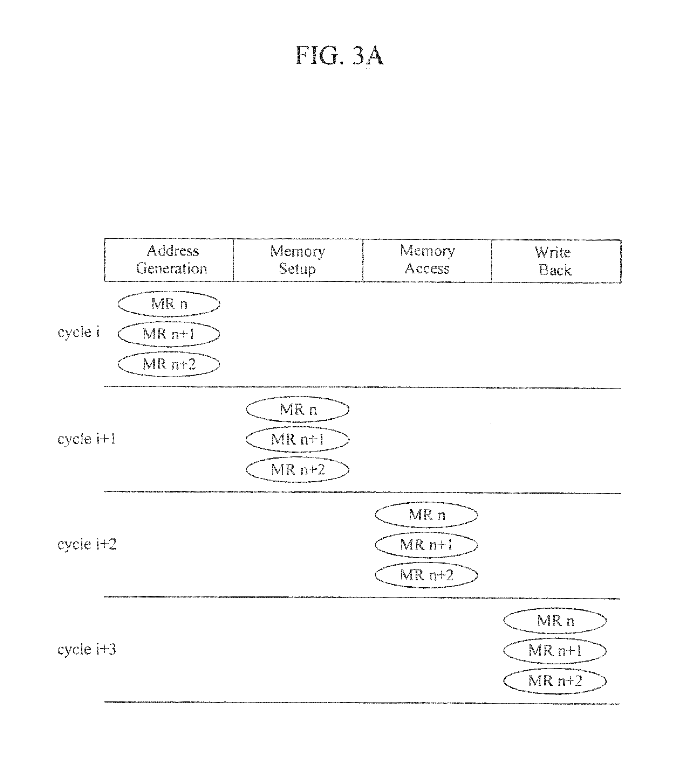

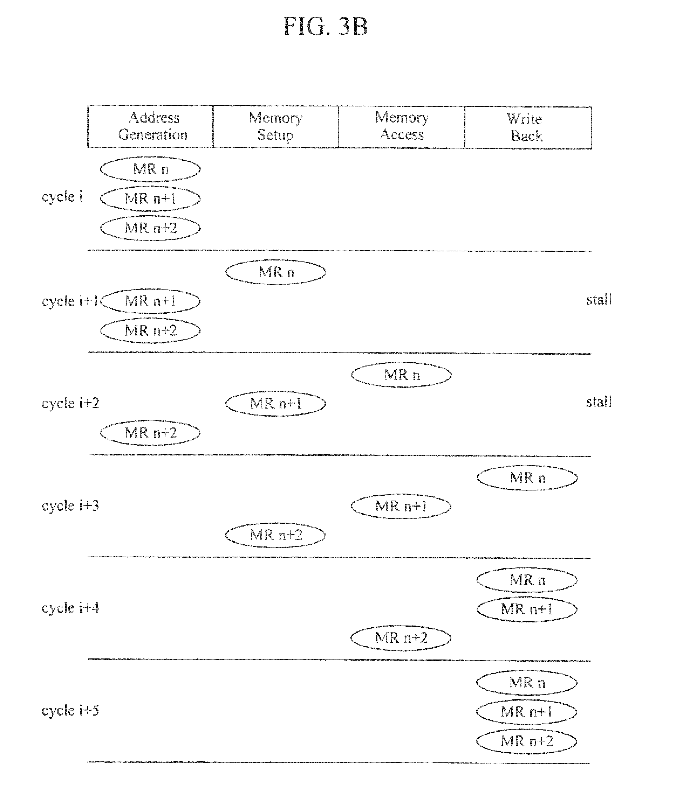

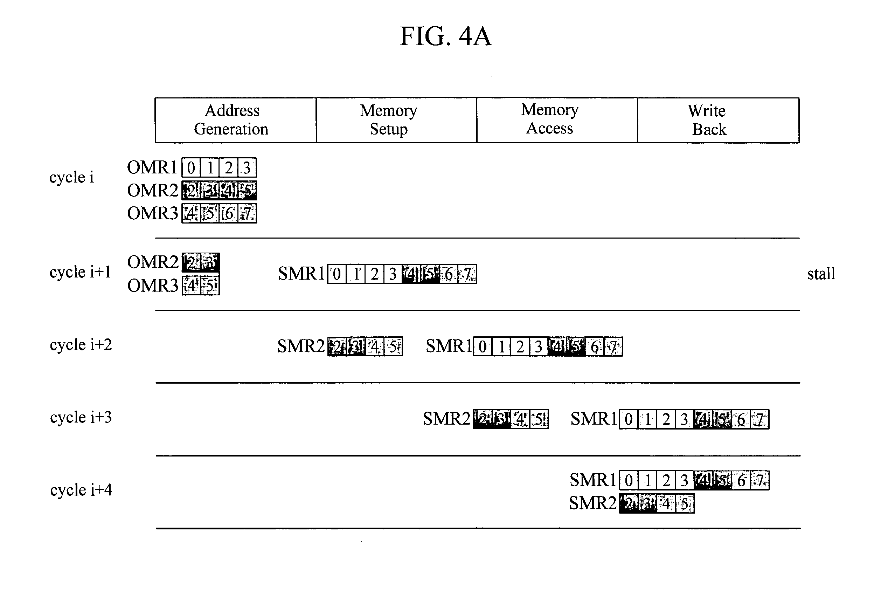

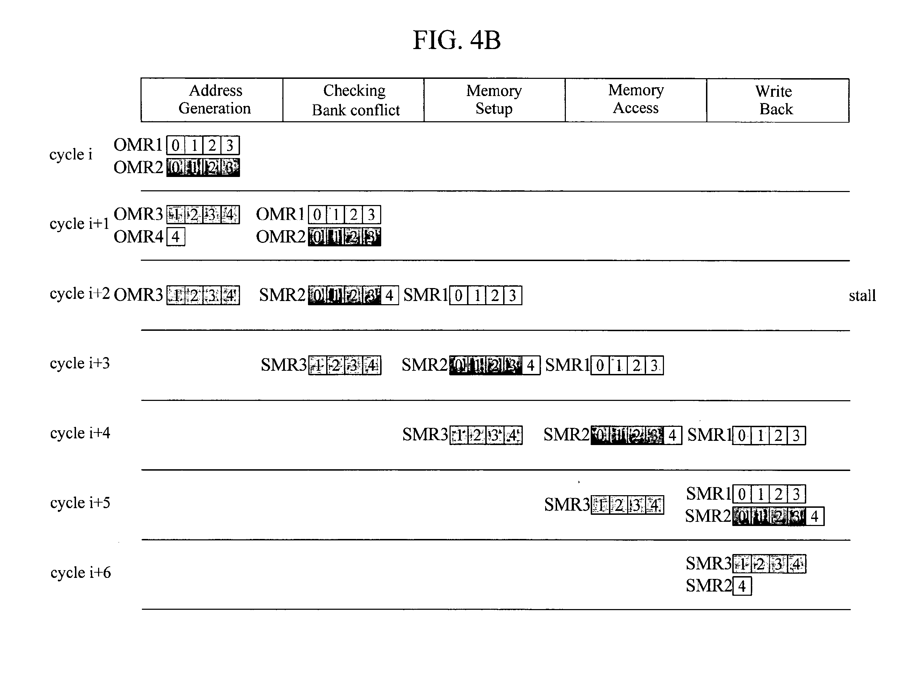

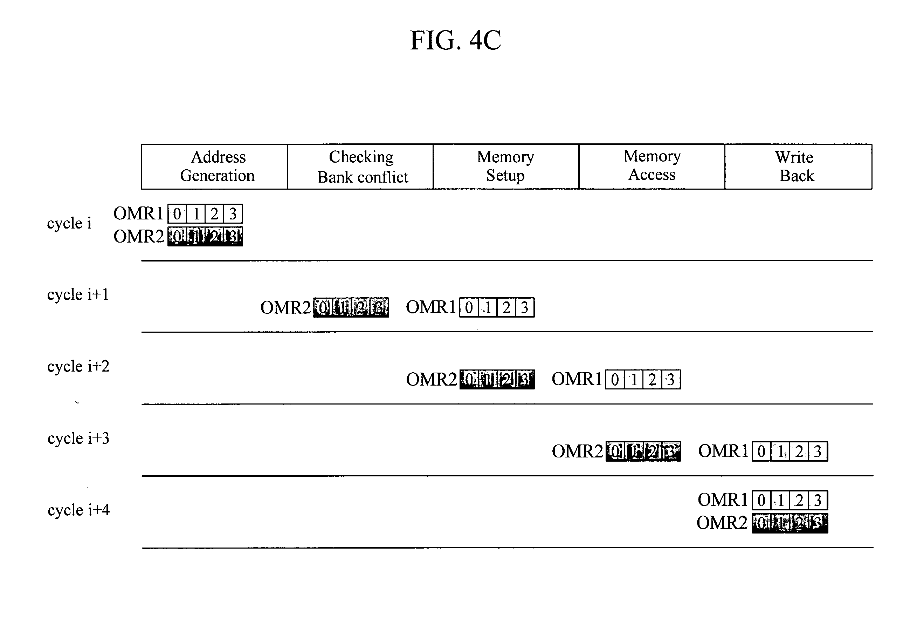

FIG. 3A is an example of a general procedure of processing memory requests when a memory bank collision does not occur. FIG. 3B is an example of a general procedure of processing memory requests when a memory bank collision occurs. FIG. 4A illustrates a procedure on how a memory control apparatus processes memory requests according to an exemplary embodiment. FIG. 4B illustrates a procedure on how a memory control apparatus processes memory requests according to another exemplary embodiment. FIG. 4C illustrates a procedure on how a memory control apparatus processes a memory request according to yet another exemplary embodiment.

FIGS. 3A and 3B are examples in which a processor issues three memory requests MR n, MR n+1, and MR n+2 at a specific cycle i at the same time in response to a memory load instruction. Specifically, FIG. 3 relates to a case where a memory bank collision does not occur between the three memory requests MR n, MR n+1, and MR n+2. If there is no collision between memory banks that are accessed by respective elements in the memory requests MR n, MR n+1, and MR n+2, the memory control apparatus 100 enters into a memory setup (MS) stage at cycle i+1, a memory access (MA) stage at cycle i+2 to load memory data, and a write-back (WB) stage at cycle i+3 to write back the loaded memory data to a register file.

FIG. 3B relates to a case where memory bank collisions occur between the three memory requests MR n, MR n+1 and MR n+2. If an element in any one of the three memory requests MR n, MR n+1, and MR n+2 attempts to access the same memory bank corresponding to another element, a memory bank collision occurs. In this case, the three memory requests are processed sequentially. For example, as illustrated in FIG. 3B, one memory request MR n enters into the MS stage in cycle i+1; another memory request MR n+1 enters into the MS stage in cycle i+2; and the remaining memory request MR n+2 enters into the MS stage in cycle i+3. In this case, a memory request(s) with a memory collision still remains in both cycle i + 1 and cycle i + 2, so that a stall is caused to occur.

FIGS. 4A to 4C demonstrates examples in which the memory control apparatus 100 shown in FIG. 2 processes memory requests on the assumption that a memory consists of seven memory banks (0∼7), and that scalar memory requests or vector memory requests are input, wherein each vector memory request includes up to four elements to access four memory banks at the same time. However, this is merely an example, and a memory may consist of one or more memory banks, and a vector memory request may consist of one or more elements.

Referring to FIG. 4A, three vector memory requests OMR 1, OMR 2, and OMR 3, each request consisting of four elements, are input from a processor. The bank determiner 110 determines a memory bank for each of the four elements included in each of the memory requests OMR 1, OMR 2, and OMR 3. As illustrated in FIG. 4A, a memory bank for the memory request OMR 1 determined by the bank determiner(110) is '0,1,2,3'; a memory bank for OMR 2 is '2,3,4,5'; and a memory bank for OMR 3 is '4,5,6,7.'

The scheduler 120 inputs elements to the buffers (0∼7), which correspond to the memory banks (0∼7), based on the information about the determined memory banks. As a result, in cycle i, one element is input to buffers 0, 1, 6 and 7, and two elements are input to buffers 2, 3, 4 and 5.

The request generator 130 generates a scheduled memory request SMR 1 to access seven memory banks in cycle i at the same time, by extracting an element from each of the buffers (0-7) for cycle i and combining the extracted elements with each other.

At cycle i + 1, the controller 140 transmits the scheduled memory request SMR 1 to the memory in an attempt to access the memory banks to load data. However, elements that have not been processed still remain in the buffers in cycle i + 1. That is, the original memory requests OMR 2 and OMR 3 have elements with a memory bank collision, and the elements have not been processed, thereby causing a stall to occur.

The scheduler 120 checks whether a new memory request for the memory banks have been determined by the bank determiner 110 exists in cycle i+1. As illustrated in FIG. 4B, a new memory request is not input in cycle i+1, so the scheduler 120 checks whether any element of any memory request remains in any one of the buffers (0-7). Then, since an element still remains in each of the specific buffers (that is, buffers 2, 3, 4 and 5), a newly scheduled memory request is generated.

The request generator 130 generates a scheduled memory request SMR 2 in cycle i+1 by extracting the elements from the specific buffers (2, 3, 4, 5).

In cycle i+2, the controller 140 is able to transmit the scheduled memory request SMR 2 to the memory. At this point, since there is no remaining element in the buffers (0∼7), no stall occurs.

Meanwhile, the scheduled memory request SMR 1 stands in one or more write buffers 320 in cycle i+3 upon completion of memory access. Then, after the original memory requests OMR 1, OMR 2, and OMR 3 are completely processed, the scheduled memory request SMR 1 is written back to the register file 400 in cycle i+4.

In a general procedure of processing memory requests, as described above with reference to FIG. 3B, memory bank collisions occur in each of the memory requests OMR 1, OMR 2, and OMR 3 so that two stalls have to occur. Yet, in the exemplary embodiments shown in FIG. 4A, only one stall occurs by scheduling memory requests, and thus, memory processing speed may become faster.

FIG. 4B is another example in which the memory control apparatus 100 processes memory requests. Referring to FIG. 4B, two memory requests OMR 1 and OMR 2 with a memory bank collision are issued simultaneously in cycle i, and then memory requests OMR 3 and OMR 4 with a memory bank collision are issued in cycle i+1. As such, when memory bank collisions occur continuously at two or more cycles, an additional stage, that is, a stage for checking existence of a memory bank collision may be added to the memory processing pipelining process, so that the memory control apparatus 100 checks existence of a memory bank collision to minimize a possibility of occurrence of a stall.

As illustrated in FIG. 4B, if memory requests OMRs 1 and 2 issued in cycle i are input, memory banks for respective elements in the memory requests OMRs 1 and 2 are determined by the bank determiner 110. Then, whether any memory bank collision occurs is checked in cycle i+1. Since all the elements in the memory requests OMRs 1 and 2 are input by the scheduler 120 to corresponding buffers 150, and all the memory banks collision with each other, the request generator 130 generates a scheduled memory request SMR 1 by extracting an element from each buffer 150. As a result, the scheduled memory request SMR 1 becomes the memory request OMR 1 that is input in cycle i. Similarly, memory banks for respective elements in the memory requests OMRs 3 and 4, which are input in cycle i+1, are determined by the bank determiner 110.

In cycle i+2, the controller 140 transmits the scheduled memory request SMI 1 to the memory, and causes a stall to occur. In addition, the scheduler 120 inputs the memory request OMR 4, which causes no memory bank collision, into the buffer 150. The request generator 130 generates the scheduled memory request SMR 2 by extracting an element from each buffer 150. As a result, the scheduled memory request SMR 2 is a combination of elements that does not have a memory bank collision between the memory requests OMRs 2 and 4.

In cycle i+3, the controller 140 transmits the scheduled memory request SMR 2 to the memory; and the scheduler 120 inputs the outstanding memory request OMR 3, which has not been processed, to the buffer 150, controls the request generator 130 to generate another scheduled memory request, and causes a stall to occur. In response, the request generator 130 generates a scheduled memory request SMR 3 by extracting an element from each buffer 150. Then, in cycle i+4, the controller 140 transmits the scheduled memory request SMR 3 to the memory.

In cycle i+4, the first sent scheduled memory request SMR 1 is completely processed then and stands by until the scheduled memory request SMR 2 is completely processed, then the SMR 1 is written back to a register file. In cycle i+5, the scheduled memory request SMR 2 is completely processed so that processing results of the original memory requests OMRs 1 and 2 are written back to a register file. Meanwhile, a processing result of the original memory request OMR 4 included in the scheduled memory request SMR 2 is not written back to the register file until the scheduled memory request SMR 3 is completely processed. In cycle i+6, the scheduled memory request SMR 3 is completely processed, and the processing results of the original memory request OMR 3 and OMR 4 are both written back to the register file.

FIG. 4C is another example in which the memory control apparatus 100 processes memory requests. Referring to FIG. 4C, two memory requests OMR 1 and OMR 2 in which a memory bank collision may occur are issued at the same time cycle i.

At this point, the memory control apparatus 100 determines whether there is an empty memory bank in a memory. If so, the memory control apparatus 100 first transmits a memory request with the highest priority, for example, the memory request OMR 1, to the memory in cycle i+1, so that a stage for checking existence of a memory bank collision may be omitted.

In the meantime, each of the elements 0, 1, 2 and 3 of the other memory request OMR 2 may standby in cycle i+1 in a corresponding memory bank. Then, the memory request OMR 2 may be processed according to a procedure described with reference to FIG. 4B,

According to this exemplary embodiment, when a new memory request is issued in a specific cycle and there is an empty memory bank, the present disclosure transmits a memory request with the highest priority directly to a memory without checking existence of a memory bank collision, thereby reducing a possibility of occurrence of a stall and enhancing processing performance.

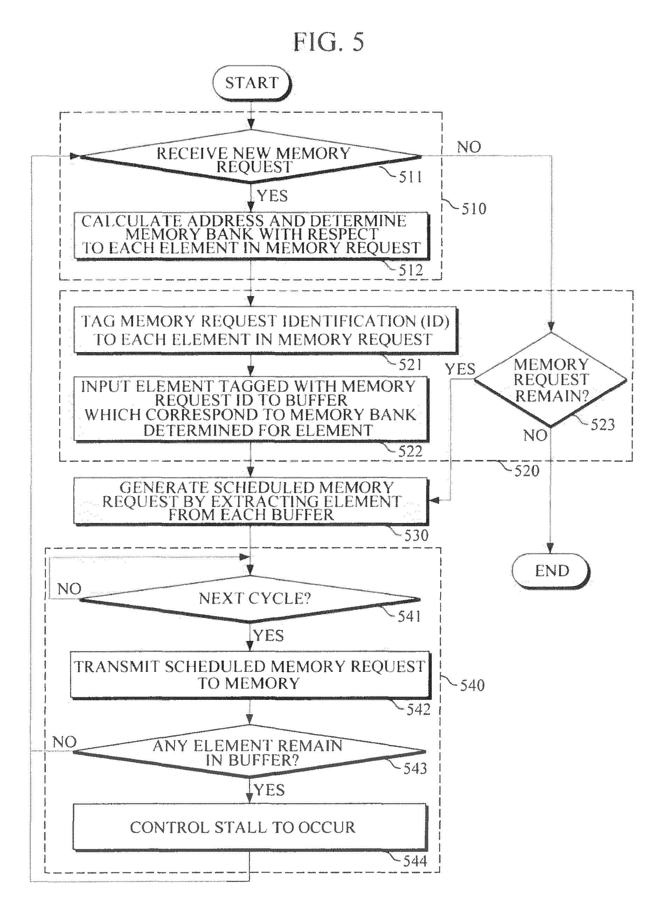

FIG. 5 is a flow chart illustrating a method for controlling a memory according to an exemplary embodiment. The method for controlling a memory may be performed by the memory control apparatus 100 shown in FIG. 2.

For one or more memory requests input in a specific cycle, the memory control apparatus 100 determines memory banks to be accessed in 510. For example, if a processor transmits a memory request to process a load/store instruction, the memory control apparatus 100 receives the memory request from the processor in 511, and then determines memory banks to be accessed by one or more elements included in the memory request in 512. At this point, the memory control apparatus 100 may calculate an address of each element, and determine a memory bank for each element based on the calculated address.

If memory banks for all the elements included in one or more memory requests are determined, the memory control apparatus 100 may schedule the elements to minimize memory bank collisions in 520. Scheduling the elements may be effective especially in the event two or more memory requests are received simultaneously in a specific cycle or where two or more memory requests, which have not been processed in a previous cycle, remains.

For example, if memory banks for all elements included in a memory request are determined, the memory control apparatus 100 tags each element with identification (ID) of a corresponding memory request in order to make it clear which element relates to which memory request in 521, and then inputs each element tagged with ID of the corresponding memory request to a corresponding buffer in 522. As such, each memory bank is provided with a corresponding buffer, and memory requests to be sent to memory are scheduled using buffers. In this manner, it is possible to schedule memory requests without a memory bank collision, and thus, reduce a possibility of occurrence of a stall in a processor.

Meanwhile, if no memory request is received in a specific cycle, the memory control apparatus 100 checks whether there is any unprocessed memory request in a buffer, that is, whether there is any element remaining in any buffer in 523. If an element exists in the buffer, it means that a memory request that was issued in a previous cycle, but has not been processed, remains in the buffer. In this case, the memory control apparatus 100 generates a scheduled memory request to be transmitted to the memory. Alternatively, in the case that no element exists in the buffer, which means that there is no memory request to be processed, the scheduling process ends. If a new element is input to a buffer or any element remains in the buffer in operation 520, the memory control apparatus 100 generates a scheduled memory request by extracting an element from each buffer in 530.

Then, the scheduled memory request is transmitted to the memory for processing in 540. Specifically, the scheduled memory request needs to stand by until the next cycle in 541, and then transmitted to the memory in the next cycle in 542. At this point, if it is determined in 543 that there is any element remaining in any buffer, a stall is caused to occur in 544. In addition, the above-described process may be performed repeatedly according to whether a new memory request is received in the next cycle in 511.

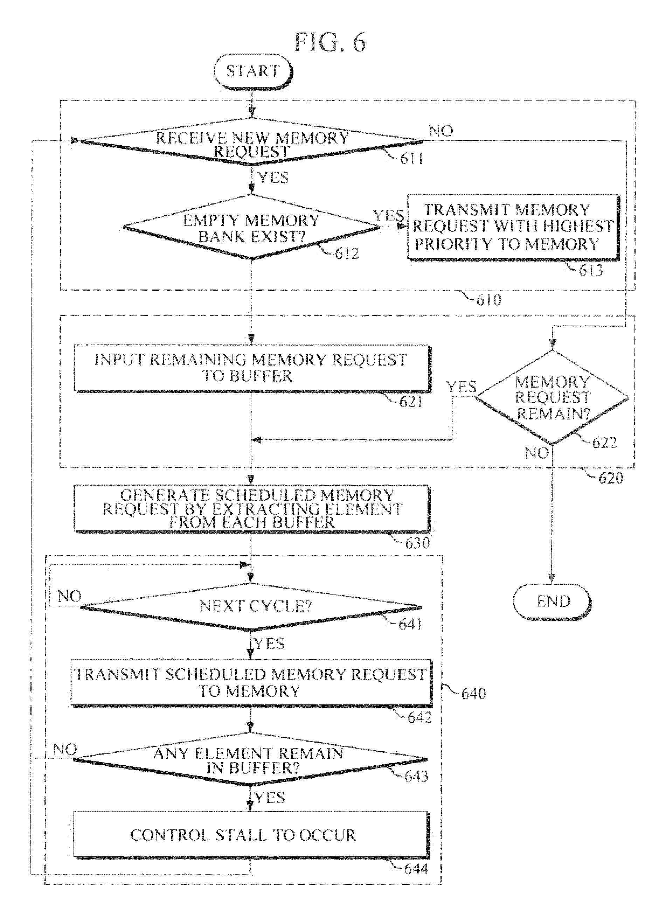

FIG. 6 is flow chart of a memory controlling method according to another exemplary embodiment. The memory controlling method may be implemented by the memory control apparatus 100.

The memory control apparatus 100 determines a memory bank to be accessed by one or more memory requests that are received in a specific cycle in operation 610. When one or more memory requests are received in the specific cycle in operation 611, the memory controlling apparatus 100 determines whether there is an empty memory bank in a memory in operation 612, as contrary to the exemplary embodiment shown in FIG. 5. If it is determined that there is an empty memory bank in the memory, the memory control apparatus 100 transmits a memory request with the highest priority to the memory without checking existence of a memory bank collision in the next cycle in operation 613. The memory control apparatus 100 may calculate an address of each element included in each received memory request, and determine a corresponding memory bank to be accessed based on the calculated address. At this time, the memory control apparatus 100 may determine that a memory request with the highest priority accesses an empty memory bank.

Then, the memory control apparatus 100 schedules a remaining memory request or an unprocessed memory request in operation 620. That is, when some of two or more memory requests received in the specific cycle in operation 610 are transmitted to an empty memory, the remaining memory requests are received in buffers in operation 621.

Meanwhile, if any memory request is not received in the specific cycle, the memory control apparatus 100 determines whether there is any memory request that has not been processed, that is, whether there is any element remaining in a buffer, in operation 622. If there is an element remaining in a buffer, it means that a memory request issued in a previous cycle still remains without being processed, so that the memory control apparatus 100 requests to generate a scheduled memory request to be transmitted to the memory. If there is no remaining element in a buffer, it means that there are no memory requests to be processed, so that the scheduling process ends.

Then, if a new element is input to a buffer in operation 620, or if any unprocessed element still remains in a buffer in operation 620, the memory control apparatus 100 may fetch an element from a buffer each at a time to generate a scheduled memory request in operation 630.

Then, the memory control apparatus 100 transmits the scheduled memory request to the memory in operation 640, so that the scheduled memory may be processed. That is, the memory control apparatus 100 waits for the next cycle in operation 641, and transmits the scheduled memory request to the memory in the next cycle in operation 642. Then, the memory control apparatus 100 checks whether any element remains in a buffer in operation 643, and, if any element remains in a buffer, causes a stall to occur in operation 644.

The methods and/or operations described above may be recorded, stored, or fixed in one or more computer-readable storage media that includes program instructions to be implemented by a computer to cause a processor to execute or perform the program instructions. The media may also include, alone or in combination with the program instructions, data files, data structures, and the like. The computer-readable storage media may be a non-transitory computer-readable storage medium. Examples of computer-readable storage media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules in order to perform the operations and methods described above, or vice versa. In addition, a computer-readable storage medium may be distributed among computer systems connected through a network and computer-readable codes or program instructions may be stored and executed in a decentralized manner.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A memory control apparatus, comprising:
a scheduler configured to, in response to a plurality of memory requests existing in a current cycle, schedule a plurality of elements included in the plurality of memory requests based on information about memory banks determined for the plurality of elements; and
a request generator configured to, after the scheduling of the plurality of elements by the scheduler, generate a scheduled memory request for the current cycle using at least one element from among the plurality of elements included in the plurality of memory requests in order to prevent a memory bank collision.

2. The memory control apparatus of claim 1, further comprising:
a bank determiner configured to, in response to receiving the plurality of memory requests, determine respective memory banks to be accessed by the plurality of elements included in the plurality of memory requests.

3. The memory control apparatus of claim 2, wherein the bank determiner is further configured to calculate respective addresses of the plurality of elements, and determine the respective memory banks for the plurality of elements based on the calculated addresses.

4. The memory control apparatus of one of claims 1 to 3, further comprising:
one or more respective buffers corresponding to one or more memory banks,
wherein the scheduler is further configured to input, in response to the respective memory banks being determined for the plurality of elements, an element of the plurality of elements to a buffer corresponding to the respective memory bank determined for the element of the plurality of elements.

5. The memory control apparatus of claim 4, wherein, when inputting the element to the corresponding buffer, the scheduler is further configured to tag the element with an identification, ID, of a memory request from the plurality of memory requests that includes the element.

6. The memory control apparatus of claim 4 or 5, wherein the request generator is further configured to generate the scheduled memory request by extracting a first respective element from each buffer, of the one or more buffers, that contains at least one respective element.

7. The memory control apparatus of one of claims 4 to 6, further comprising:
a controller configured to, in response to at least one element existing in any one of the buffers after generation of the scheduled memory request, cause a stall to occur when transmitting the scheduled memory request to a memory.

8. The memory control apparatus of claim 7, wherein the controller is further configured to transmit the scheduled memory request to the memory in a next cycle.

9. A memory controlling method, comprising:
generating a scheduled memory request comprising at least one scheduled element from a plurality of memory request elements included in a plurality of memory requests,
wherein the plurality of memory requests comprise respective at least one memory request element,
wherein each memory request element from among the plurality of memory request elements and each scheduled element from among the at least one scheduled element has a corresponding determined memory bank, and
wherein the determined memory bank of each scheduled element from among the at least one scheduled element of the scheduled memory request differs from the determined memory bank of each of the other scheduled elements from among the at least one scheduled element of the scheduled memory request.

10. The memory controlling method of claim 9, wherein the generating comprises extracting a respective memory request element from at least one buffer, and
wherein the at least one buffer corresponds to the determined memory bank of the respective memory request element.

11. The memory controlling method of claim 10, wherein each of the at least one buffer uniquely corresponds to one memory bank.
